## Europäisches Patentamt

## European Patent Office

## Office européen des brevets

(19)

(11) Veröffentlichungsnummer: **0 088 208**
**B1**

(12) # EUROPÄISCHE PATENTSCHRIFT

(45) Veröffentlichungstag der Patentschrift:
**10.04.85**

(51) Int. Cl.⁴: **B 60 N 3/08,** A 24 F 19/00

(21) Anmeldenummer: **83100148.2**

(22) Anmeldetag: **11.01.83**

(54) **Behälter mit Klappdeckel, insbesondere Ascher für Fahrzeuge.**

(30) Priorität: **11.03.82 DE 3208788**

(43) Veröffentlichungstag der Anmeldung:
**14.09.83 Patentblatt 83/37**

(45) Bekanntmachung des Hinweises auf die Patenterteilung:
**10.04.85 Patentblatt 85/15**

(84) Benannte Vertragsstaaten:
**DE FR GB IT**

(56) Entgegenhaltungen:
**DE - U - 8 206 751**
**US - A - 3 332 541**

(73) Patentinhaber: **Gebr. Happich GmbH,**
**Postfach 10 02 49 Clausenbrücke 1,**
**D-5600 Wuppertal 1 (DE)**

(72) Erfinder: **Dabringhaus, Volker, Erkrather Strasse 63,**
**D-5600 Wuppertal 11 (DE)**
Erfinder: **Dietz, Günter, Eggenbruch 97,**
**D-5600 Wuppertal 1 (DE)**

## Beschreibung

Die Erfindung bezieht sich auf einen Behälter mit Klappdeckel, insbesondere Ascher für Fahrzeuge, mit einem Behältertopf, der an zwei einander abgewandten Aussenwänden jeweils eine Feder und ein Lager aufweist, wobei die wahlweise als Rast- oder Gleitfeder dienende Feder aus einem am Behältertopf mittels eines Befestigungselements festgelegten Fussteil und einem gegenüber der Fussteilebene geneigten Federarm besteht und wobei das aus Lagerzapfen und Lageraufnahme gebildete Lager für die klappbewegliche Anordnung des Klappdeckels am Behältertopf vorgesehen ist.

Ein durch offenkundige Benutzung bekanntgewordener Ascher für Fahrzeuge weist an zwei parallel zueinander verlaufenden Aussenwänden seines Behältertopfes aus Federstahl bestehende Federn auf, die mittels Nieten an den Aussenwänden festgelegt sind. Die Federn dienen, ähnlich wie beim Gegenstand nach dem DE-GM Nr. 6808941, dazu, den Behältertopf in einer diesen aufnehmenden Einbauöffnung festzulegen, indem die Federn die Wandung der Einbauöffnung rastenartig hintergreifen. Weiterhin weist der bekannte Ascher einen Klappdeckel auf. Zur klappbeweglichen Anordnung des Klappdeckels ist dieser an zwei Seitenrändern mit abgewinkelten konsolenartigen Ansätzen ausgebildet, die an ihren freien Endbereichen mit Lagerzapfen versehen sind, welche in entsprechende Lageraufnahmen des Behältertopfes eingreifen. Diese Ausbildung des Klappdeckels mit angeformten Lagerzapfen setzt aber voraus, dass der Klappdeckel aus einem Federeigenschaften aufweisenden Werkstoff besteht, damit die konsolenartigen Ansätze bei der Montage des Klappdeckels bis zum Einrasten der Lagerzapfen in die Lageraufnahmen gegeneinander gebogen werden können. Bei verschiedenen Behältern, insbesondere bei Aschern, wird aber nun aus Gründen eines erhöhten Sicherheitsdenkens verlangt, dass nicht nur der Behältertopf, sondern auch der Klappdeckel aus einem relativ flammfesten Material besteht, wozu insbesondere duroplastische Kunststoffe zählen, die jedoch im allgemeinen nur äusserst geringe Federeigenschaften aufweisen. Wird also nun der Klappdeckel aus Formstoff (Duroplast) hergestellt, so ergibt sich die Notwendigkeit, zu seiner klappbeweglichen Anordnung am Behältertopf separate Lager herzustellen und zu montieren.

Die bekannten Behälter mit Klappdeckel besitzen demnach den allgemeinen Nachteil eines vielteiligen Aufbaus und einer dadurch bedingten aufwendigen Montierbarkeit.

Die der Erfindung zugrunde liegende Aufgabe besteht nun darin, einen Behälter mit Klappdeckel, insbesondere Ascher für Fahrzeuge, zu schaffen, der sich durch eine verringerte Anzahl von Bauteilen und durch eine vereinfachte Montierbarkeit auszeichnen soll.

Gemäss der Erfindung wird diese Aufgabe dadurch gelöst, dass die Feder einstückig und materialeinheitlich mit dem Befestigungselement und mit einem der Lagerteile ausgebildet ist.

Durch diese erfindungsgemässe Massnahme ist es gelungen, für die Ausübung von drei Funktionen, für die bisher jeweils ein separates Bauteil herzustellen und zu montieren war, nur ein einziges Bauteil vorzusehen. Der erfindungsgemässe Behälter besteht daher aus lediglich vier Bauelementen, nämlich dem Behältertopf, dem Klappdeckel und den beiden Federn, die jeweils einstückig mit einem Befestigungselement für ihre Festlegung am Behältertopf und mit einem Lagerteil für die klappbewegliche Anordnung des Klappdeckels kombiniert sind. Durch den Wegfall von bisher erforderlichen Einzelteilen wird vorteilhafterweise eine Kostensenkung und eine wesentliche Montagevereinfachung erreicht. Auch ergibt sich durch das an der Feder einstückig angeformte Lagerteil eine freie Werkstoffauswahl für den Klappdeckel.

Im Hinblick auf eine einfache und kostengünstige Herstellbarkeit ist es von Vorteil, dass die Feder aus einem thermoplastischen Kunststoffmaterial, wie insbesondere POM oder PA, besteht.

Das an der Feder angeordnete Befestigungselement kann aus einem Spreizniet bestehen, der durch Eintreiben eines einstückig am Fussteil der Feder angespritzten Bolzens aufspreizbar ist. Alternativ kann das Befestigungselement aber z. B. auch aus einem Nietschaft bestehen, der zwecks Bildung eines durch Heisssiegeln od. dgl. herzustellenden Nietkopfes mit Überlänge ausgebildet ist.

Ausführungsbeispiele der Erfindung werden nachfolgend anhand der Zeichnung näher erläutert. Es zeigen

Fig. 1 die Seitenansicht eines Behälters,
Fig. 2 den Schnitt II-II nach Fig. 1, und
Fig. 3 bis 7 Einzelheiten der Erfindung.

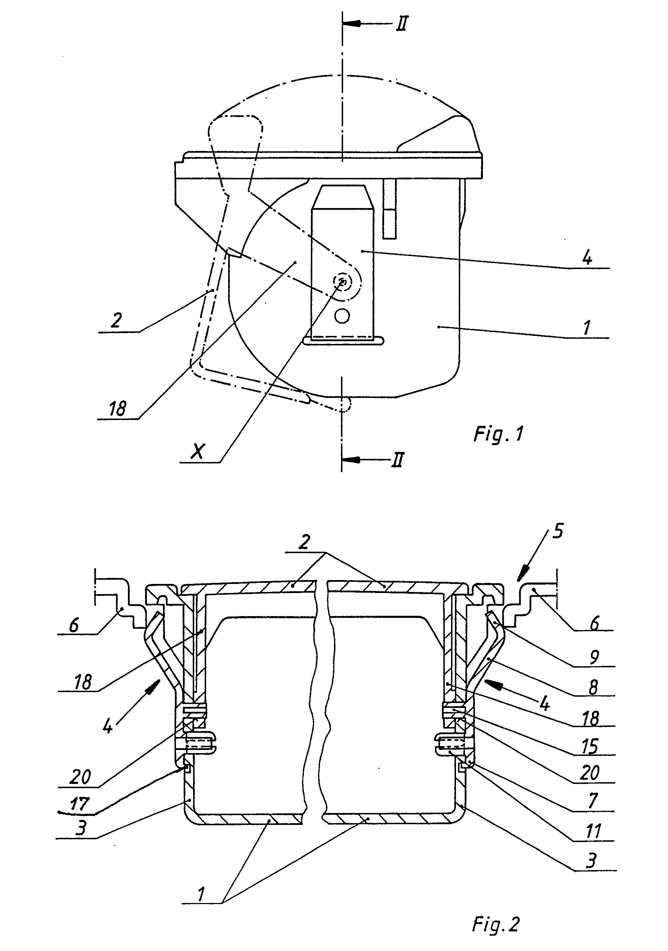

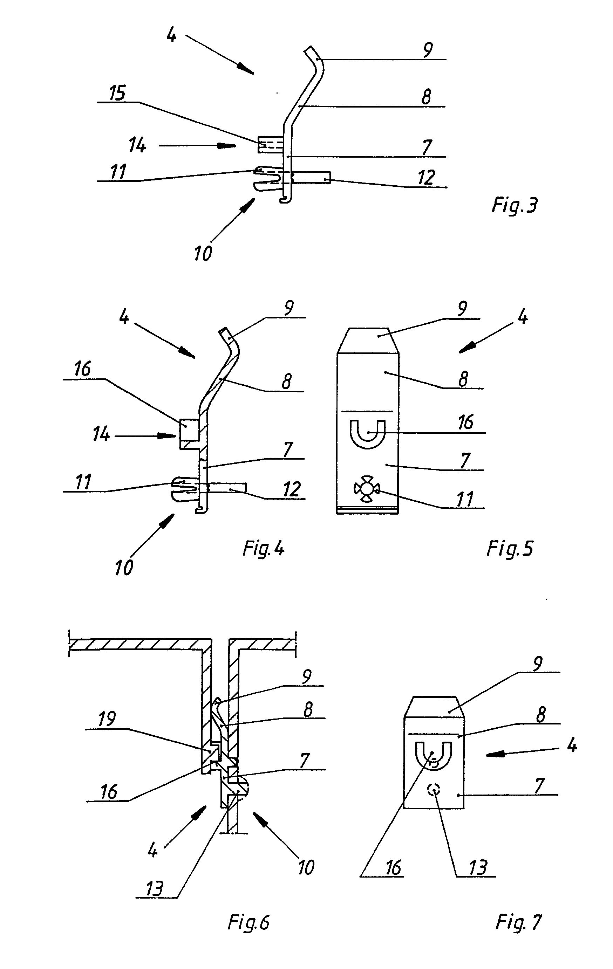

Der Behälter gemäss den Fig. 1 und 2 ist als Ascher für ein Kraftfahrzeug ausgebildet und vornehmlich zum versenkten Einbau in die Aufnahme einer Konsole od. dgl. bestimmt.

Im einzelnen besteht der Behälter aus einem Behältertopf 1 und einem Klappdeckel 2. An zwei parallel zueinander ausgerichteten Aussenwänden 3 ist der Behältertopf 1 jeweils mit einer Feder 4 ausgerüstet, die nach dem Ausführungsbeispiel der Fig. 1 und 2 zum einen dazu bestimmt sind, den Behältertopf 1 in der Aufnahmeöffnung 5 einer Konsole od. dgl. lösbar zu fixieren, indem sie mit ihren abgewinkelten freien Endbereichen den Rand 6 der Aufnahmeöffnung 5 hintergreifen, und zum andern dazu bestimmt sind, den Klappdeckel 2 klappbeweglich zu lagern.

Die Feder 4 besteht, wie die Fig. 3 bis 7 erkennen lassen, aus einem Fussteil 7 und einem gegenüber der Fussteilebene geneigten Federarm 8, dessen freier Endbereich eine zur Fussteilebene hin gerichtete Abwinklung 9 aufweist. Die Feder 4 ist im unteren Bereich ihres Fussteils 7 mit einem Befestigungselement 10 ausgebildet, welches nach den Fig. 3 bis 5 aus einem Spreizniet 11 bestehen kann, der durch einen angespritzten Bolzen 12 aufspreizbar ist. Als Befestigungselement 10 kann aber auch ein Nietschaft 13 (Fig. 6 und 7) vorgesehen sein, der zwecks Bildung eines Nietkopfes eine gewisse Überlänge besitzt.

Neben dem integrierten Befestigungselement 10 weist die Feder 4 noch ein weiteres integriertes Bauteil, nämlich ein Lagerteil 14 auf, welches für die klappbewegliche Anordnung des Klappdeckels 2 vorgesehen ist. Das Lagerteil 14 kann (vgl. Fig. 3) aus einem Lagerzapfen 15 oder (vgl. Fig. 4 bis 7) aus einer Lageraufnahme 16 bestehen.

Zur lageorientierten Ausrichtung weist die Feder 4 am freien Ende ihres Fussteils 7 einen in eine Ausnehmung der Seitenwand 3 des Behältertopfes 1 eingreifenden Steg 17 auf.

Bei der Montage wird die Feder 4 so am Behältertopf 1 angeordnet, dass sich ihr Fussteil 7 an der Aussenfläche der Aussenwand 3 abstützt. Die Aussenwand 3 ist mit Bohrungen zum Durchlass des Befestigungselements 10 sowie des Lagerteils 14 versehen. Durch die Festlegung der Feder 4 durch Eintreiben des Bolzens 12 in den Spreizniet 11 oder durch Bildung eines Nietkopfes am Nietschaft 13 ist die Montage der Feder und auch die Lagerung des Klappdeckels 2 abgeschlossen.

Zur klappbeweglichen Lagerung des Klappdeckels 2 weist dieser zwei abgewinkelte konsolenartige Ansätze 18 auf, die im nahen Abstand von den Innenseiten der Aussenwände 3 angeordnet sind. Diese Ansätze 18 weisen im Bereich ihrer freien unteren Enden wahlweise eine eine Lageraufnahme bildende Bohrung 20 (vgl. Fig. 2) zur Aufnahme eines Lagerzapfens 15 oder einen angespritzten Lagerzapfen 19 (vgl. Fig. 6) auf, der in die Lageraufnahme 16 der Feder 4 eingreift.

Beim Ausführungsbeispiel gemäss den Fig. 1 und 2 dient die Feder 4 zum wiederholbaren Einrasten des Behältertopfes 1 in eine Aufnahmeöffnung 5, während die Feder 4 beim Ausführungsbeispiel nach Fig. 6 eine Gleitfederfunktion erfüllt.

In Fig. 1 ist mit strichpunktierten Linien der Klappdeckel 2 mit seinen konsolenartigen Ansätzen 18 in seiner aufgeklappten Lage gezeigt, wobei die Lagerteile 20, 15 bzw. 16, 19 den Drehpunkt X bilden.

## Patentansprüche

1. Behälter mit Klappdeckel (2), insbesondere Ascher für Fahrzeuge, mit einem Behältertopf (1), der an zwei einander abgewandten Aussenwänden (3) jeweils eine Feder (4) und ein Lager aufweist, wobei die wahlweise als Rast- oder Gleitfeder dienende Feder (4) aus einem am Behältertopf (1) mittels eines Befestigungselements (10) festgelegten Fussteil (7) und einem gegenüber der Fussteilebene geneigten Federarm (8) besteht und wobei das aus Lagerzapfen (15 bzw. 19) und Lageraufnahme (16) gebildete Lager für die klappbewegliche Anordnung des Klappdeckels (2) am Behältertopf (1) vorgesehen ist, dadurch gekennzeichnet, dass die Feder (4) einstückig und materialeinheitlich mit dem Befestigungselement (10) und mit einem der Lagerteile (Lagerzapfen 15 bzw. 19 oder Lageraufnahme 16) ausgebildet ist.

2. Behälter nach Anspruch 1, dadurch gekennzeichnet, dass die Feder (4) aus einem thermoplastischen Kunststoffmaterial besteht.

3. Behälter nach einem der Ansprüche 1 oder 2, dadurch gekennzeichnet, dass die Feder (4) aus POM (Polyacetal) oder PA (Polyamid) besteht.

4. Behälter nach einem oder mehreren der Ansprüche 1 bis 3, dadurch gekennzeichnet, dass das Befestigungselement (10) aus einem Spreizniet (11) besteht, der durch Eintreiben eines einstückig am Fussteil (7) der Feder (4) angespritzten Bolzens (12) aufspreizbar ist.

5. Behälter nach einem oder mehreren der Ansprüche 1 bis 3, dadurch gekennzeichnet, dass das Befestigungselement (10) aus einem Nietschaft (13) besteht, der zwecks Bildung eines durch Heisssiegeln od. dgl. herzustellenden Nietkopfes mit Überlänge ausgebildet ist.

## Claims

1. A receptacle including a hinged lid (2), particularly an ash-tray for a vehicle, the receptacle being a casing (1) provided at the oppositely directed external faces of each of two parallel outer walls (3) with a spring (4) and a bearing, in which the spring (4), which is selectively useable as a stop spring or as a slide spring, comprises a bottom portion (7) secured to the casing (1) by a fastening element (10), and a spring leg (8) inclined in relation to the plane containing the bottom portion, and in which the bearing composed of a journal pin (15 or 19) and a journal bearing (16) serves to attach the lid (2) to the casing (1) in such a way as to permit the lid to be hingedly moved, characterized in that the spring (4) is integral with and made of the same material as the fastening element (10) and also one of the bearing elements (either the journal pin 15 or 19 or, alternatively, the journal bearing 16).

2. A receptacle according to Claim 1, characterized in that the spring (4) is made of a synthetic thermoplastic material.

3. A receptacle according to one of Claims 1 or 2, characterized in that the spring (4) is made of one of the polyacetal or polyamide compounds.

4. A receptacle according to one or more of Claims 1 to 3, characterized in that the fastening element (10) is an expanding rivet (11) expandable by driving a stud (12) into it, and in that the stud is injection-moulded so as to form an integral part of the bottom portion (7) of the spring (4).

5. A receptacle according to one or more of Claims 1 to 3, characterized in that the fastening element (10) is a rivet shank (13) which, for the purpose of forming — by means of heat-sealing or the like — a rivet head, is of oversize length.

## Revendications

1. Réservoir comportant un couvercle rabattable (2), en particulier cendrier pour véhicules, comportant une cuve (1) comportant, sur chacune de deux parois extérieures (3) opposées l'une à l'autre, un ressort (4) et un palier, le ressort (4), qui sert à volonté de ressort d'encliquetage ou de glissement, comprenant un pied (7) fixé à la cuve (1) au moyen d'un élément de fixation (10) et une branche (8) inclinée par rapport au plan contenant le pied et dans lequel le palier constitué par un tourillon (15 ou 19) et un logement (16) est destiné au placement du couvercle (2) sur la cuve (1) de façon qu'il soit rabattable, caractérisé en ce que le ressort (4) est réalisé d'un seul tenant avec l'élément de fixation (10) et avec l'un des éléments de palier (tourillon 15 ou 19, ou logement de palier 16) et dans la même matière.

2. Réservoir selon la revendication 1, caractérisé en ce que le ressort (4) est constitué par une matière thermoplastique.

3. Réservoir selon l'une des revendications 1 ou 2, caractérisé en ce que le ressort (4) est en POM (polyacétal) ou en PA (polyamide).

4. Réservoir selon une ou plusieurs des revendications 1 à 3, caractérisé en ce que l'élément de fixation (10) est constitué par un rivet à expansion (11) qui peut être ouvert en enfonçant une cheville (12) moulée par injection d'un seul tenant sur le pied (7) du ressort (4).

5. Réservoir selon une ou plusieurs des revendications 1 à 3, caractérisé en ce que l'élément de fixation (10) est constitué par une tige de rivet (13) qui présente une surlongueur pour former une tête de rivet à réaliser par thermosoudage ou par un procédé analogue.

Fig. 1

Fig. 2

Fig. 3

Fig. 4          Fig. 5

Fig. 6          Fig. 7